# EUROPÄISCHE PATENTSCHRIFT

(11) **EP 1 799 979 B1**
(45) Veröffentlichungstag und Bekanntmachung des Hinweises auf die Patenterteilung: **23.04.2008**
(21) Anmeldenummer: 05798162.3
(22) Anmeldetag: 07.10.2005
(51) Int. Cl.: F01N 3/20

(54) **EINRICHTUNG ZUR DOSIERTEN EINSPRITZUNG EINES REDUKTIONSMITTELS IN DEN ABGASTRAKT EINER BRENNKRAFTMASCHINE**
DEVICE FOR THE METERED INJECTION OF A REDUCING AGENT INTO THE EXHAUST MANIFOLD OF AN INTERNAL COMBUSTION ENGINE
DISPOSITIF D'INJECTION DOSEE D'UN AGENT DE REDUCTION DANS LA TUBULURE DE GAZ D'ECHAPPEMENT D'UN MOTEUR A COMBUSTION INTERNE

(30) Priorität: 13.10.2004 DE 102004050023
(43) Veröffentlichungstag der Anmeldung: 27.06.2007
(73) Patentinhaber: L'ORANGE GMBH, D-70435 Stuttgart (DE)
(72) Erfinder: BAKAJ, Leo, 70736 Fellbach (DE); MALITSKY, Wilhelm, 74360 Ilsfeld-Helfenberg (DE)
(74) Vertreter: Winter, Josef
(86) Internationale Anmeldenummer: PCT/EP2005/010815
(87) Internationale Veröffentlichungsnummer: WO 2006/040086

(56) Entgegenhaltungen:
- EP-A- 1 176 292
- DE-A1- 2 249 291
- US-A1- 2004 093 856
- US-B1- 6 203 770
- US-B1- 6 293 097

## Beschreibung

Es ist bekannt, die Stickoxide im Abgas von Brennkraftmaschinen, insbesondere im Abgas von Dieselbrennkraftmaschinen, durch selektive katalytische Reduktion.zu vermindern. Zu diesem Zweck wird das Reduktionsmittel, eine wässrige Harnstofflösung, fein zerstäubt in dosierter Menge in den Abgastrakt eingespritzt. Zur Förderung des Reduktionsmittels wird üblicherweise eine Pumpe verwendet, die das Reduktionsmittel einer Düse zuführt, die in den Abgastrakt mündet.

Aus der US 2004/0093856 A1 geht eine Dosiereinrichtung für Reduktionsmittel als bekannt hervor, die sich einer Hubkolbenpumpe bedient. Die Pumpe besitzt einen Sauganschluss, der mit einem Vorratsbehälter für Reduktionsmittel verbunden ist und einen Druckanschluss, der mit einer Zerstäubereinrichtung in Verbindung steht. Die Zerstäubereinrichtung mündet im Bereich eines Denoxkatalysators in den Abgastrakt einer Brennkraftmaschine. Zur Steuerung der Fördermenge wird die Frequenz oder die Pulsweite variiert. Hierzu dient eine Steuereinrichtung, die abhängig vom Motorbetrieb den Antriebsstrom der Pumpe in geeigneter Weise variiert. Die Ausbildung der Düse ist nicht näher dargestellt. Es wird aber davon ausgegangen, dass die Düse in üblicher Weise eine oder mehrere ständig geöffnete Öffnungen besitzt. Mit einer solchen Düse ist eine gleichmäßige Zerstäubung über den gesamten Arbeitsbereich bei wechselnder Fördermenge nicht erreichbar.

In der EP 1 380 733 A2 wird eine Hubkolbenpumpe zur Dosierung von wässriger Harnstofflösung verwendet, deren Kolben über ein Piezoelement betätigbar ist. Das Piezoelement kann mit einer Frequenz von 0 bis mehreren 100 Hertz stufenlos angesteuert werden. Die zur Einspritzung des Reduktionsmittels in den Abgastrakt einer Brennkraftmaschine dienende Düse ist offenbar mit einer blendenartigen Verengung ausgebildet, die ständig offen ist. Eine gleichmäßige Zerstäubung über den gesamten Arbeitsbereich bei wechselnder Fördermenge kann mit einer solchen Düse nicht erreicht werden.

Eine weitere Einrichtung zur Dosierung von Reduktionsmittel in den Abgastrakt einer Brennkraftmaschine geht aus der DE 101 39 139 A1 als bekannt hervor. Eine Pumpe dient zur Förderung des Reduktionsmittels. Ein Steuergerät regelt die zu fördernde Reduktionsmittelmenge über eine elektrische Ansteuerung des Pumpenantriebs. Das Steuergerät steuert auch die Funktion eines in einer Zumesseinrichtung integrierten Dosierventils. Weiter ist angegeben, dass an Stelle einer Dosierpumpe auch eine einfache Pumpe in Verbindung mit einem Druckregelventil zur Mengenregelung verwendet werden kann.. Auch bei dieser Variante erfolgt die Dosierung der in den Abgastrakt einzudüsenden Menge offenbar durch ein Dosierventil. Die Einrichtung erscheint aufwendig, da Fördern und Dosieren von unterschiedlichen Bauteilen wahrgenommen wird, die separat anzusteuern sind.

Die DE 22 49 291 zeigt ein Verfahren zum luftlosen Farbspritzen, das jedoch bei der Betrachtung der Erfindungshöhe der vorliegenden Erfindung ohne Belang ist, da.es nicht auf einem Nachbargebiet liegt. Bei diesem Verfahren wird von einer pulsierend fördernden Membranpumpe Gebrauch gemacht, die das geförderte Medium einer Zerstäuberdüse zuführt, die nach Art eines Überdruckventils als Absperrventil ausgebildet ist. Das Absperrventil öffnet und schließt periodisch selbsttätig, und zwar derart, dass während einer Druckperiode die Mediumzuführung jeweils im Bereich niedrigen Drucks unterbrochen wird, so dass die Zerstäubung ausschließlich im Bereich hohen Drucks erfolgt. Damit werden zur Zerstäubung nur die Druckspitzen benutzt, die anteilig die feinste.Zerstäubung bringen.

Der im Patentanspruch 1 angegebenen Erfindung liegt das Problem zu Grunde, die Einspritzung eines Reduktionsmittels in den Abgastrakt einer Brennkraftmaschine unabhängig von der Fördermenge mit durchgängig hoher Zerstäubungsqualität vorzunehmen unter Einsatz einer einfachen und kostengünstigen Apparatur. Dieses Problem wird durch die im Patentanspruch 1 aufgeführten Merkmale dadurch gelöst, dass:die Düse ein eine Durchflussverbindung periodisch im Takt des Förderimpulses der Pumpe selbsttätig öffnendes und schließendes Ventilelement besitzt, das die Einspritzung von Reduktionsmittel nur in Bereichen hohen Drucks zulässt. Die Apparatur ist einfach und kostengünstig, weil Dosierung und Förderung des Reduktionsmittels allein durch die Pumpe erfolgt, während das im Fördertakt öffnende und schließende Ventilelement der Düse die alleinige Funktion hat, die Zerstäubung optimal zu gestalten.

Zweckmäßigerweise ist das Ventilelement der Düse in einem Gehäuse verschiebbar geführt, in Richtung auf seine Sperrlage zu einem Dichtsitz dichtend federbelastet und in der Gegenrichtung durch den anstehenden Druck an druckbeaufschlagten Flächen zu öffnen.

Im Weiteren wird die Zerstäubungsqualität auch dadurch verbessert, dass die Hochdruckleitung, die mit dem Hochdruckauslass der Pumpe verbunden ist, über eine eine Druckentlastungseinrichtung enthaltende Druckentlastungsleitung mit dem Pumpenarbeitsraum verbunden ist. Dadurch kann eine schlagartige Druckabsenkung erfolgen, wenn der Druck im Pumpenarbeitsraum unter einen vorgegebenen Wert, insbesondere unter den Druck in der Hochdruckleitung fällt. Schlagartig heißt, dass die Druckkurve im abfallenden Ast steiler abfällt als ohne Druckentlastungseinrichtung. Das hat den Vorteil, dass der Bereich des labilen Kräftegleichgewichts am Ventilelement beim Schließen schnell durchschritten wird, wodurch ein unerwünschtes Nachtropfen von Reduktionsmittel weitgehend unterdrückt wird.

Ein Ausführungsbeispiel der Erfindung ist in der Zeichnung dargestellt und wird im Folgenden näher beschrieben.

Es zeigen:
- Fig. 1: Eine schematische Darstellung der Bauteile einer erfindungsgemäßen Einrichtung zur Harnstoffdosierung;
- Fig. 2: ein Diagramm des Druckverlaufs des von einer Pumpe geförderten Reduktionsmittels in einer von der Pumpe zur Düse führenden Hochdruckleitung;
- Fig. 3: eine Hubkolbenpumpe in der Querschnittsansicht;
- Fig. 4: eine Membranpumpe in der Querschnittsansicht;
- Fig. 5: eine Düse in der Querschnittsansicht;
- Fig. 6: eine Querschnittsansicht einer eine Druckentlastungseinrichtung enthaltenden Druckentlastungsleitung, die mit dem Pumpenarbeitsraum der Pumpe und der Hochdruckleitung verbunden ist;
- Fig. 7: eine als Rückschlagventil ausgebildete Druckentlastungseinrichtung in der Querschnittsansicht;
- Fig. 8: eine mit einer Membran ausgebildeten Druckentlastungseinrichtung in der Querschnittsansicht.

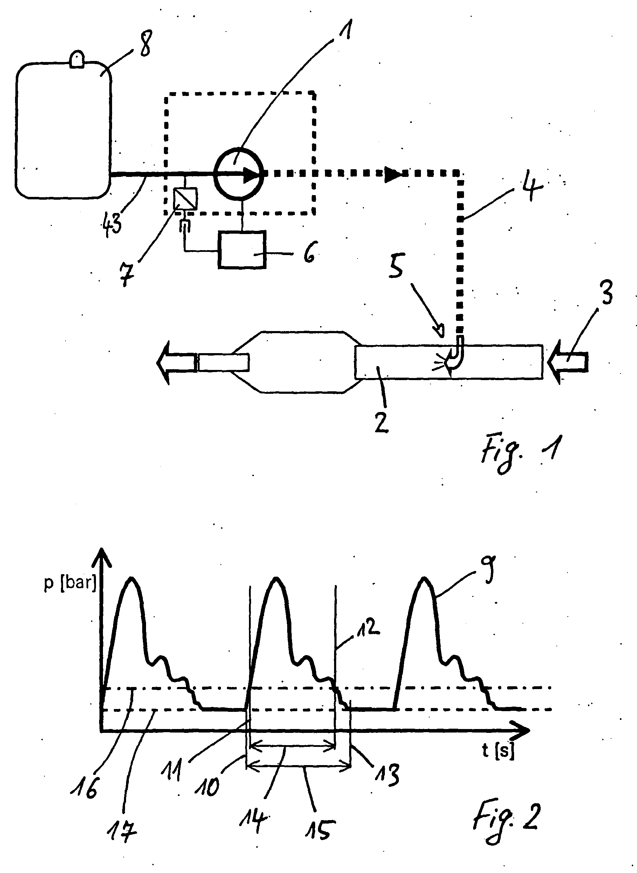

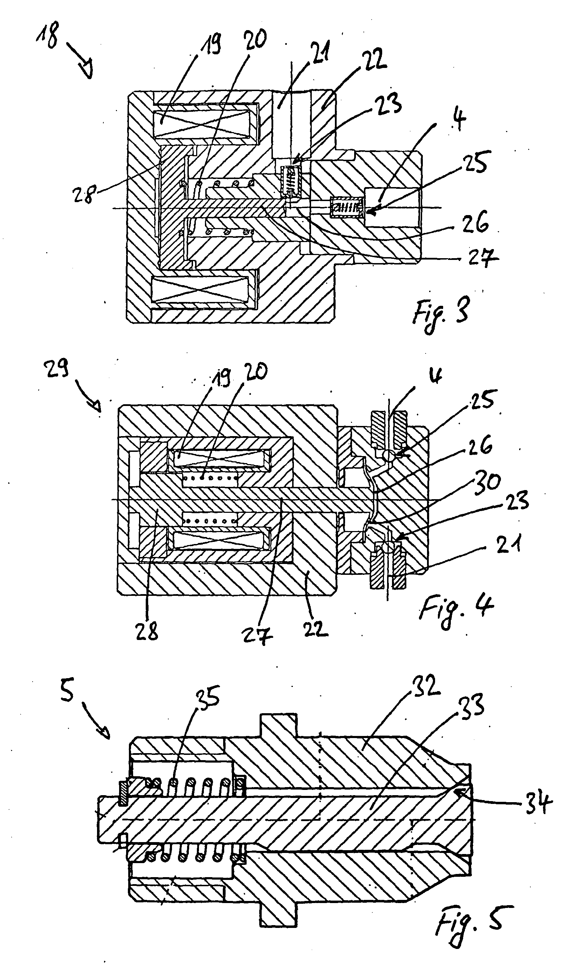

Die Figur 1 zeigt eine Schemaansicht einer Einrichtung zur dosierten Einspritzung eines Reduktionsmittels. Eine Pumpe 1 entnimmt aus einem Vorratsbehälter 8 Reduktionsmittel und fördert dieses über eine Hochdruckleitung 4 und eine Düse 5 in den von Abgas 3 durchströmten Abgastrakt 2 einer nicht dargestellten Brennkraftmaschine. Die Pumpe 1 ist als Kolbenpumpe 18, wie in Figur 3 dargestellt oder als Membranpumpe 29, wie in Figur 4 dargestellt, ausgeführt. Die Pumpe 1 ist zugleich Förder- und Dosiereinheit. Die Düse 5, die in Figur 5 näher dargestellt ist, hat keine Dosierfunktion, sondern dient vielmehr dazu, das Druckniveau festzulegen, bei dem eine Einspritzung erfolgt. Die Pumpe 1 wird von einem Steuergerät 6 angesteuert, das in Abhängigkeit von Abgaswerten und/oder Motorbetriebsparametern die Arbeitsfrequenz der Pumpe 1 und damit die geförderte Menge bei konstantem Hub ändert. Hierzu wird eine mit einem Magnetanker 28 zusammenwirkende Spule 19 mit entsprechenden Stromimpulsen beaufschlagt.. Mit einem Temperatursensor 7 wird die Temperatur des Reduktionsmittels im Steuergerät 6 berücksichtigt.

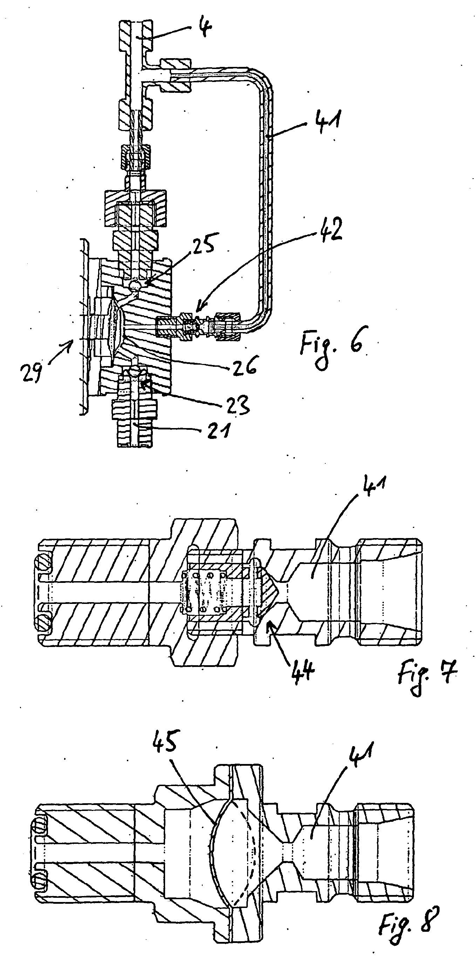

Das in Figur 2 dargestellte Diagramm zeigt mit drei Druckimpulsen den Druckverlauf 9, wie er in der Hochdruckleitung 4 vor der Düse 5 auftritt. Zum Zeitpunkt 10 beginnt der Pumpvorgang der Pumpe 1, das heißt, der Kolben 27 oder die Membrane 30 der Pumpe 1 beginnt sich zu bewegen und der Druck in der Hochdruckleitung 4 steigt an. Zum Zeitpunkt 11 öffnet das Ventilelement 33 der Düse 5 und der Einspritzvorgang beginnt. Zum Zeitpunkt 12 schließt das Ventilelement der Düse 5. Zum Zeitpunkt 13 schließt das Saugventil der Pumpe 1. Im abfallenden Ast der Druckkurve 9 wirkt ein Druckentlastungssystem, das mit den Figuren 6 bis 8 näher dargestellt ist. Dem Diagramm ist im Weiteren mit der Bezugsziffer 14 die Düsenöffnungsdauer zu entnehmen und mit der Bezugsziffer 15 die Dauer der Kolben- bzw. Membranbewegung. Die strichpunktierte Linie 16 zeigt das Druckniveau, bei dem die Düse 5 öffnet bzw. schließt. Die gestrichelte Linie 17 gibt das Druckniveau an, bei dem das Saugventil (23) der Pumpe (1) schließt, bzw. das Druckventil (25) öffnet. Die Einspritzung erfolgt bei Drücken, die oberhalb der strichpunktierten Linie liegen, während bei Drücken unterhalb dieses Druckniveaus keine Einspritzung erfolgt. Damit ist sichergestellt, dass die Zerstäubung bei hohem Druck erfolgt und optimal und fein ist, was Voraussetzung für eine optimale chemische Umsetzung der Stickoxide ist.

Die Figuren 3 und 4 zeigen eine Kolbenpumpe 18 bzw. eine Membranpumpe 29 in herkömmlicher Bauart. Solche einfachen Konstanthubpumpen sind ohne weitere Modifikation bei dem erfindungsgemäßen Dosiersystem einsetzbar. Die Pumpen werden elektrisch angesteuert und weisen hierzu einen Anker 28 und eine stromdurchflossene Wicklung 19. auf. Eine Rückstellfeder 20 dient zur Positionierung des Tankers 28 in der Ausgangsposition. Bei Bestromung der Wicklung 19 verschiebt sich der Kolben 27 bzw. die Membran 30 unter Verkleinerung des Pumpenarbeitsraums 26, wodurch der Druck des über den Sauganschluss 21 und das Rückschlagventil 23 angesaugten Reduktionsmittels erhöht wird. Der Ausstoß des Reduktionsmittels in die Hochdruckleitung 4 erfolgt über den Hochdruckanschluss 24 und das Rückschlagventil 25. Ein Gehäuse 22 dient zur Führung und Bildung der notwendigen Druckräume. Auf die Darstellung der Arbeitsweise im Einzelnen wird verzichtet, da solche Pumpen hinlänglich bekannt sind.

Eine bei dem erfindungsgemäßen Dosiersystem einsetzbare Düse 5 ist in Figur 5 dargestellt. Sie besteht aus einem in einem Gehäuse 32 geführten Ventilelement 33. Das Ventilelement 33 ist mit einem tellerförmigen Rand ausgebildet, der zusammen mit dem Gehäuse 32 einen Dichtsitz 34 bildet. Eine Schließfeder 35, die sich am Gehäuse 32 und am Ventilelement 33.abstützt, hält das Ventilelement 33 in der geschlossenen Position. Wenn die Kraft aus dem auf die Flächen des Ventilelements 33 wirkenden Drucks größer ist als die Kraft der Schließfeder 35, hebt das Ventilelement 33 vom Dichtsitz 34 ab und es erfolgt eine Eindüsung von Reduktionsmittel in den Abgastrakt 2 der Brennkraftmaschine. Die Düse 5 ist bezüglich der vom Druck beaufschlagten.Flächen und der Schließfeder 35 so abgestimmt, dass eine Einspritzung nur oberhalb eines vorgegebenen Mindestdrucks erfolgt. Die Dosierpumpe arbeitet intermittierend. Auf Grund dieser Ausbildung sind gleiche Zerstäubungsbedingungen sowohl bei kleinen als auch großen Fördermengen gewährleisten.

In der Figur 6 ist eine Druckentlastungseinrichtung 42 zargestellt, die in einer Druckentlastungsleitung 41 angeordnet ist. Die Druckentlastungsleitung 41 ist an die Hochdruckleitung 4 und den Pumpenarbeitsraum 26 angeschlossen. Die Druckentlastungseinrichtung 42 kann, wie in Figur 7 dargestellt, als Rückschlagventil 44 ausgebildet sein, oder wie in Figur 8 dargestellt, als Membran 45, die unter Verschiebung eines Volumens zwei gegensätzlich gewölbte Positionen einnehmen kann. Das Rückschlagventil 44 besitzt ein Ventilglied, das sich zur Freigabe eines Durchflusses in Richtung auf den Pumpenarbeitsraum 26 hin verschiebt. Durch die Druckentlastungseinrichtung 42 wird eine selbsttätige Verschiebung eines Volumens aus der Hochdruckleitung 4 in Richtung des Pumpenarbeitsraums 26 ermöglicht und damit eine schlagartige Druckabsenkung in der Hochdruckleitung 4 nach dem Schließen der Düse 5 erreicht. Die Druckabsenkung findet.statt, wenn der Druck im Pumpenarbeitsraum 26 unter den Druck in der Hochdruckleitung 4 fällt. Das ist der Fall, wenn die Pumpbewegung der Pumpe 1 endet und die Saugbewegung beginnt. Dann überwiegt der Druck in der Hochdruckleitung 4 gegenüber dem Druck im Pumpenarbeitsraum 26 und das Rückschlagventil 44 öffnet bzw. die Membran 45 nimmt eine zur dargestellten Wölbung gegensätzliche Position ein. Der Druck in der Hochdruckleitung 4 sinkt dann bis zu einem Restdruck ab, bei welchem im Falle des Rückschlagventils 44 die Federkraft gegenüber der resultierenden Druckkraft überwiegt und dadurch das Ventil schließt. Der Restdruck ist abhängig von der Auslegung der druckbeaufschlagten Flächen und der Federsteifigkeit. Die Druckentlastungseinrichtung 42 bewirkt nach dem Ende der Pumpbewegung einen steil abfallenden Druckverlauf und dadurch eine schlagartige Entlastung der Hochdruckleitung 4 mit dem Vorteil, dass das Ventilelement.33 der Düse 5 aufgrund des im Vergleich zu einem System ohne Druckentlastung verkürzten Durchgangs durch die Kräftegleichgewichtsphase schnell einen stabil geschlossenen Zustand einnimmt, so dass ein Nachtropfen von Reduktionsmitteln in den Abgastrakt 2 weitgehend vermieden wird. Insbesondere wird aber zumindest die Ausbildung großer Tropfen vermieden. Insgesamt wird somit eine feine Zerstäubung unabhängig von der Fördermenge über den gesamten Arbeitsbereich hinweg erzielt, weil bezüglich der Zerstäubungsqualität ungünstige Druckbereiche bei der Einspritzung ausgeklammert sind oder zumindest schnell durchlaufen werden.

## Patentansprüche

1. Einrichtung zur dosierten Einspritzung eines Reduktionsmittels, insbesondere einer wässrigen Harnstofflösung, in den Abgastrakt (2) einer Brennkraftmaschine, insbesondere einer Dieselbrennkraftmaschine, mit einer Pumpe (1) zur pulsierenden Förderung des Reduktionsmittels, insbesondere einer Kolbenpumpe (18) oder einer Membranpumpe (29), und mit einer in den Abgastrakt (2) mündenden Düse (5), wobei die Pumpe (1) einen Pumpenarbeitsraum (26) aufweist, der einerseits über ein Rückschlagventil (23) und über eine Saugleitung (43) mit einem Vorratsbehälter (8) und andrerseits über ein Rückschlagventil (25) und über eine Hochdruckleitung (41) mit der Düse (5) verbunden ist.
**dadurch gekennzeichnet,**
**dass** die Düse (5) periodisch mit einem im Takt des Förderpulses der Pumpe (1) in Ansprache auf den anliegenden Druck eine Durchflussverbindung selbsttätig öffnenden und schließenden Ventilelement (33) ausgebildet ist, das die Einspritzung von Reduktionsmittel in Bereichen niedrigen Drucks nicht zulässt, so dass die Zerstäubung ausschließlich in Bereichen hohen Drucks erfolgt, dass die Hochdruckleitung (4) zwischen Rückschlagventil (25) und Düse (5) über eine eine Druckentlastungseinrichtung (42) enthaltende Druckentlastungsleitung (41) mit dem Pumpenarbeitsraum (26) verbunden ist, und dass die Druckentlastungseinrichtung (42) im Saughub der Pumpe (1) eine selbsttätige Verschiebung eines Volumens aus der Hochdruckleitung (4) in Richtung Pumpenarbeitsraum (26) ermöglicht und damit eine schnelle Druckabsenkung in der Hochdruckleitung (4) und der angeschlossenen Düse (5) erlaubt.

2. Einrichtung nach Anspruch 1,
**dadurch gekennzeichnet,**
**dass** die Pumpe (1) als Konstanthubpumpe ausgebildet ist, und dass zur Dosierung des Reduktionsmittels.die Hubfrequenz in Abhängigkeit von Motorbetriebsparametern oder der Abgaszusammensetzung durch elektrische Ansteuerung des Pumpenantriebs veränderbar ist.

3. Einrichtung nach Anspruch 1 oder 2,
**dadurch gekennzeichnet,**
**dass** das Ventilelement (33) der Düse (5) in einem Gehäuse (32) verschiebbar geführt ist, in Richtung auf seine Sperrlage zu einem Dichtsitz (34) dichtend federbelastet ist und in der Gegenrichtung durch den anstehenden Druck an druckbeaufschlagten Flächen zu öffnen ist.

4. Einrichtung nach Anspruch 3,
**dadurch gekennzeichnet,**
**dass** das Ventilelement (33) in Strömungsrichtung öffnet, und dass der Dichtsitz (34) ringförmig ausgebildet ist und zwischen dem Gehäuse (32) und einem tellerförmigen Rand des Ventilelements (33) liegt.

5. Einrichtung nach einem der Ansprüche 1 bis 4,
**dadurch gekennzeichnet,**
**dass** eine Druckabsenkung erfolgt, wenn der Druck im Pumpenarbeitsraum (26) unter den Druck in der Hochdruckleitung (4) fällt.

6. Einrichtung nach einem der Ansprüche 1 bis 5,
**dadurch gekennzeichnet,**
**dass** die Druckentlastungseinrichtung (42) als in Richtung auf den Pumpenarbeitsraum (26) öffnendes Rückschlagventil (44) ausgebildet ist.

7. Einrichtung nach einem der Ansprüche 1 bis 5,
**dadurch gekennzeichnet,**
**dass** die Druckentlastungseinrichtung (42) mit einer Membrane (45) ausgebildet ist, die abhängig von der an der Membran anstehenden Druckdifferenz zwei gegensätzlich gewölbte Positionen unter Verschiebung eines Volumens einnimmt.

## Claims

1. Device for the metered injection of a reducing agent, in particular an aqueous urea solution, into the exhaust tract (2) of an internal combustion engine, in particular of a diesel internal combustion engine, having a pump (1) for the pulsed delivery of the reducing agent, in particular a piston pump (18) or a diaphragm pump (29), and having a nozzle (5) which opens out into the exhaust tract (2), with the pump (1) having a pump working space (26) which is connected both via a non-return valve (23) and via a suction line (43) to a reservoir (8) and also via a non-return valve (25) and via a high-pressure line (41) to the nozzle (5),
**characterized**
**in that** the nozzle (5) is formed with a valve element (33) which periodically, in the stroke of the delivery pulse of the pump (1), automatically opens and closes a throughflow connection in response to the applied pressure, and which does not permit the injection of reducing agent in ranges of low pressure, so that the vaporization takes place only in ranges of high pressure, in that the high-pressure line (4) between the non-return valve (25) and the nozzle (5) is connected to the pump working space (26) by means of a pressure release line (41) which contains a pressure release device (42), and in that the pressure release device (42) permits, in the suction stroke of the pump (1), an automatic displacement of a volume from the high-pressure line (4) in the direction of the pump working space (26) and therefore a fast pressure reduction in the high-pressure line (4) and in the connected nozzle (5).

2. Device according to Claim 1,
**characterized**
**in that** the pump (1) is embodied as a fixed displacement pump, and in that, in order to meter the reducing agent, the stroke frequency can be varied as a function of engine operating parameters or of the exhaust-gas composition by means of electric activation of the pump drive.

3. Device according to Claim 1 or 2,
**characterized**
**in that** the valve element (33) of the nozzle (5) is guided in a movable fashion in a housing (32), is sealingly spring-loaded in the direction of its blocking position to form a sealing seat (34), and can be opened in the opposite direction by the pressure applied to pressure-loaded faces.

4. Device according to Claim 3,
**characterized**
**in that** the valve element (33) opens in the flow direction, and in that the sealing seat (34) is of annular design and is situated between the housing (32) and a plate-shaped edge of the valve element (33).

5. Device according to one of Claims 1 to 4,
**characterized**
**in that** a pressure reduction takes place when the pressure in the pump working space (26) falls below the pressure in the high-pressure line (4).

6. Device according to one of Claims 1 to 5,
**characterized**
**in that** the pressure release device (42) is embodied as a non-return valve (44) which opens in the direction of the pump working space (26).

7. Device according to one of Claims 1 to 5,
**characterized**
**in that** the pressure release device (42) is formed with a diaphragm (45) which assumes two oppositely arched positions, so as to displace a volume, as a function of the pressure difference applied to the diaphragm.

## Revendications

1. Dispositif pour l'injection dosée d'un agent réducteur, notamment d'une solution aqueuse d'urée, dans le système de gaz d'échappement (2) d'un moteur à combustion interne, notamment d'un moteur diesel, avec une pompe (1) pour le transport pulsatoire de l'agent réducteur, notamment une pompe à piston (18) ou une pompe à membrane (29) et avec un injecteur (5) débouchant dans le système de gaz d'échappement (2), la pompe (1) comportant un espace de travail de pompe (26), qui d'une part par l'intermédiaire d'un clapet anti-retour (23) et par l'intermédiaire d'un conduit d'aspiration (43) est relié avec un réservoir de stockage (8) et d'autre part, par l'intermédiaire d'un clapet anti-retour (25) et par l'intermédiaire d'un conduit haute pression (41) est relié avec l'injecteur (5),
**caractérisé en ce que**
l'injecteur (5) est conçu avec un élément de soupape (33) périodiquement ouvrant et fermant automatiquement une liaison d'écoulement à la cadence de l'impulsion de transport de la pompe (1), en réponse à la pression appliquée, n'autorisant pas l'injection d'agent réducteur dans les zones de basse pression, pour que la pulvérisation ait lieu uniquement dans les zones de haute pression, **en ce que**, entre le clapet anti-retour (25) et l'injecteur (5), le conduit haute pression (4) est relié avec l'espace de travail de la pompe (26) par l'intermédiaire d'un conduit de décompression (41) comprenant un dispositif de décompression (42) et **en ce que** le dispositif de décompression (42) permet pendant la course d'aspiration de la pompe (1) un déplacement automatique d'un volume hors du conduit haute pression (4) en direction de l'espace de travail de la pompe (26) et admet donc une chute de pression rapide dans le conduit haute pression (4) et dans l'injecteur (5) raccordé.

2. Dispositif selon la revendication 1, **caractérisé en ce que** la pompe (1) est conçue sous la forme d'une pompe à course de levée constante et **en ce que**, pour le dosage de l'agent réducteur, la fréquence de levée est variable en fonction de paramètres de service du moteur ou de la composition des gaz d'échappement par excitation électrique de l'entraînement de la pompe.

3. Dispositif selon la revendication 1 ou 2,
**caractérisé en ce que** l'élément de soupape (33) de l'injecteur (5) est guidé de façon déplaçable dans un carter (32), est soumis en direction de sa position de blocage à un ressort pour assurer l'étanchéité en direction d'un siège d'étanchéité (34) et doit s'ouvrir en direction opposée par la pression appliquée sur des surfaces soumises à pression.

4. Dispositif selon la revendication 3, **caractérisé en ce que** l'élément de soupape (33) s'ouvre dans la direction d'écoulement et **en ce que** le siège d'étanchéité (34) est conçu sous forme annulaire et se situe entre le carter (32) et un bord en forme de disque de l'élément de soupape (33).

5. Dispositif selon l'une quelconque des revendications 1 à 4, **caractérisé en ce qu'**on assiste à une chute de pression, lorsque la pression dans l'espace de travail de la pompe (26) devient inférieure à la pression dans le conduit haute pression (4).

6. Dispositif selon l'une quelconque des revendications 1 à 5, **caractérisé en ce que** le dispositif de décompression (42) est conçu sous la forme d'un clapet anti-retour (44) s'ouvrant en direction de l'espace de travail de la pompe (26).

7. Dispositif selon l'une quelconque des revendications 1 à 5, **caractérisé en ce que** le dispositif de décompression (42) est conçu avec une membrane (45) qui en fonction de la pression différentielle appliquée sur la membrane, adopte deux positions à courbure opposée, en déplaçant un volume.
